# EUROPEAN PATENT APPLICATION

(11) **EP 4 374 682 A1**
(43) Date of publication of application: **29.05.2024**
(21) Application number: 22209157.1
(22) Date of filing: 23.11.2022
(51) Int. Cl.: A01D 90/04, A01F 15/10, A01F 29/09

(54) **HARVESTING MACHINE**

(71) Applicant: CNH Industrial Belgium N.V., 8210 Zedelgem (BE)
(72) Inventor: Dewitte, Tomas H., 8890 Moorslede (BE); Liefooghe, Dries, 8690 Alveringem (BE); Devroe, Jeroen, 8770 Ingelmunster (BE)
(74) Representative: CNH Industrial IP Department

(57) **Abstract**

The present invention provides a harvesting machine (1) comprising a main frame (3) having a main actuator (2); a cutting frame (4) having a crop guiding surface (6) including a plurality of slots (5) and a plurality of knives (7) arranged side-by-side and pivotally mounted below the crop guiding surface (6) in the slots (5); an outer frame (8) being pivotable and being connected to the actuator (2) for moving the outer frame (8) with respect to the main frame (3); an inner frame (10) having a plurality of operating units (11), and having a selector mechanism (15) configured to selectively engage one or more of the plurality of operating units (11); wherein the outer frame (8) includes a plurality of levers (13), each lever (13) being pivotally connected to an operating unit (11) of each knife (7); wherein guiding means (14) are provided for lateral movement of the crop guiding surface (6) with the plurality of knives (7) from an operating position into a servicing position and vice versa; and wherein, during said lateral movement, the operating units (11) and the selector mechanism (15) remain stationary.

## Description

The present invention relates to a harvesting machine, such as balers or loading wagons, having a crop cutting device.

Agricultural harvesting machines or implements such as balers or self-loading wagons or carts often comprise a cutting device equipped to shred the cut crop for different purposes. Other self-driving agricultural machines such as forage harvesters may also be equipped with such a crop cutting device.

The cutting device of such a harvesting machine is usually arranged in the crop channel of the baler, the loading wagon or other agricultural machine so that the crop may be transported on a crop guiding surface towards a plurality of knives to be cut in contact with the knives' blades. In the case of balers or loading carts, the crop transfer is usually effected by a rotor which is rotating around an axis perpendicular to the crop channel and which typically includes a plurality of rotor stars axially mounted in a continuous offset on the rotor axis so as to achieve a uniform conveyance of the crop.

With regard to the crop channel, such harvesting machines include a plurality of knives arranged side-by-side in rows, wherein the number of knives protruding next to one another from the crop guiding surface into the crop channel dictates the number of effective blades or edges and thus an achievable length of the cut crop. It is generally desirable to be able to select and use different numbers of blades to adapt to the particular application or harvesting conditions.

To protect the knives from damages by stones or other unwanted particles or objects that are generally not shreddable or choppable and to enable a selection of a desired number of knives, it is customary for the knives to be pivotable relative to a frame of the cutting device so that each knife can be pivoted between a non-operating position and an operating position. In the non-operating position, however, the knife is in a position in which it is largely withdrawn from the crop channel, unable to cut crop. In the operating position, the knife is in a position in which it protrudes into the crop channel so that crop flowing past is crushed or cut in cooperation with the knife. For clamping and subsequent holding of the knife in the operating position each knife is associated with an operating or clamping unit, which has, for example, a spring element. A common, moveable actuator is used to pivot the operating units together with the respective knife from the non-operating position into the operating position and vice versa. In view of the increasing number of installed knives in cutting devices as well as the high-acting forces, the back-and-forth movement of the knives presents a mechanical challenge.

Due to the high number of blades on the rotor and on the knives, these cutting devices require an increased degree of maintainability. Thus, the knives should be accessible and replaceable in a simple way.

EP 2 659 761 A1 discloses an agricultural harvesting machine where the crop cutting device includes chopping knives protruding into a conveyor passage and cooperating with rotor stars on a rotor. This machine comprises a main frame and a cutting frame having a security mechanism for protecting the knives and a selection mechanism for selecting the crop cutting size. The cutting frame is linearly moveable, e. g. for maintenance purposes in a direction parallel to the rotating axis of the rotor. When the cutting frame is moved into the non-operative maintenance position, all components are moved, i.e. the crop guiding surface, the knives, the security mechanisms for each knife and also the selection mechanism. This results in a very heavy part, a complex mechanical structure and a rather disadvantageous replacement procedure as it is difficult to access certain components of the cutting frame.

It is therefore the object of the present invention to provide a harvesting machine which overcomes at least some of the disadvantages of the prior art as listed above, where the structure is compact and relatively simple, and which offers a simplified maintenance and replacement of the knives and the crop guiding surface while ensuring a reliable and smooth cutting function including the security of the knives and an unfailing knife selection mechanism.

This object is achieved by the subject matter of independent claim 1 of the present invention. Advantageous embodiments and aspects are described in the dependent claims.

According to one aspect of the invention, a harvesting machine, particularly a baler or a loading cart or wagon, comprises a main frame having a main actuator, a cutting frame having a crop guiding surface including a plurality of slots extending in a direction of travel of crop over the crop guiding surface and a plurality of knives arranged side-by-side and pivotally mounted below the crop guiding surface, wherein each knife is aligned with a respective slot and is movable between a retracted inoperative position in which it is located substantially below the crop guiding surface and an extended operative position, where-in at least a cutting edge of each knife projects above said guiding surface, an outer frame being pivotable around a common pivot axis and being connected to the main actuator which is configured for moving the outer frame with respect to the main frame, an inner frame having a plurality of operating units, each operating unit being associated with a respective knife and each being configured to being operated to bring the associated knife from the retracted inoperative position in-to the extended operative position, and having a selector mechanism configured to selectively engage one or more of the plurality of operating units such that the respective knife can be brought from the retracted inoperative position into the extended operative position, wherein the outer frame includes an axis for pivotally holding a plurality of levers, each lever being pivotally connected to an operating unit of each knife, wherein guiding means are provided for lateral movement of the crop guiding surface with the plurality of knives from an operating position into a servicing position and vice versa, and wherein, during lateral movement of the crop guiding surface with the plurality of knives from the operating position into the servicing position and vice versa, the operating units and the selector mechanism of the cutting frame remain stationary.

With these technical features the mechanical structure of the cutting device of the harvesting machine has been significantly improved, i.e. simplified. Maintenance work is now easier because of better access to the knives and to the crop guiding surface when they have been laterally moved out. Fewer space is needed, less weight has to be moved, and less material also means less complexity. Thus, the harvesting machine according to the invention is less prone to malfunctions and easier to maintain or repair.

According to a further preferred aspect, the inner frame may comprise an assembly configured to cooperate with the plurality of operating units to bring the operating units into or out of engagement with the selector mechanism upon activation of the main actuator. This increases the functionality of the technical features while at the same time the overall construction is simplified. Operating the main actuator for the outer frame will not only offer the possibility of sliding out the crop guiding surface and the knives for maintenance or replacement as described above but also open the opportunity to modify or adapt the selection mechanism with regard to the selection of how many knives shall be actively moved beyond the crop guiding surface. In other words, operating one actuator effects a combination of two functionalities. It should be noted at this point that the two functions do not always be activated at the same time.

According to a further aspect of the invention, the inner frame may be pivotally connected to the outer frame around the common pivot axis and the guiding means may be provided on the inner frame. The pivotal connection of the inner frame with the outer frame represents a relatively simple technical construction which saves space when a single actuator is used. It also enables a very low position of all components which simplifies the access to those components when an adjustment must be made or a maintenance or replacement is carried out. Also, in the lowest position, it may be possible to slide out the crop guiding surface with the knives.

According to another aspect, the inner frame may be fixedly attached to the main frame and the guiding means may be provided on the outer frame. This represents an alternative embodiment having also a relatively simple construction. The weight to be moved by the main actuator can thus be further reduced because only the outer frame is shifted.

According to an advantageous aspect of the invention, a locking lever may be provided which is configured to lock the inner frame with respect to the outer frame along the movement of the outer frame around the common pivot axis. This locking possibility may prevent an unintended sliding out of crop guiding surface and knives and can thus work as a security mechanism. Unlocking the inner frame from the outer frame after a predetermined pivotal movement will, for example, enable the outer frame to move further while the inner frame stops, or vice versa. The activation of other mechanisms will be possible by this locking/unlocking function.

According to another aspect, the assembly as described above may comprise a stop axis on the inner frame and a plurality of stop brackets provided on each of the plurality of operating units. When operating the main actuator, such features may further simplify the construction and provide a reliable disengaging mechanism for the safety mechanism of the operation units with the selection means.

According to a further aspect of the invention, the main actuator may be a hydraulic actuator. Hydraulic actuators are a reliable technology which is usually available on the main frame of an agricultural harvester such as a baler or a forage harvester. In this regard, the main actuator may involve manual, electrical, electromechanical, or hydraulic actuation.

According to another aspect of the invention, upon activation of the main actuator, the plurality of levers are configured to release the knives for lateral movement with the crop guiding surface.

The invention is now by example described under reference to the drawings in which:
- Fig. 1: is a perspective view of a preferred embodiment of the harvesting machine according to the invention in a first position;
- Fig. 2: is a cross-sectional view of the harvesting machine shown in Fig. 1;
- Fig. 3: is a side view of the harvesting machine shown in Fig. 1
- Fig. 4: is a side view of the preferred embodiment of the harvesting machine according to the invention in a second position;
- Fig. 5: is a perspective, cross-sectional view of the harvesting machine shown in Fig. 4;
- Fig. 6: is a perspective view of a second embodiment of the harvesting machine according to the invention in a first position;
- Fig. 7: is a perspective view of the second embodiment of the harvesting machine in a second position; and
- Fig. 8: is a perspective, cross-sectional view of the second embodiment of the harvesting machine in a third position.

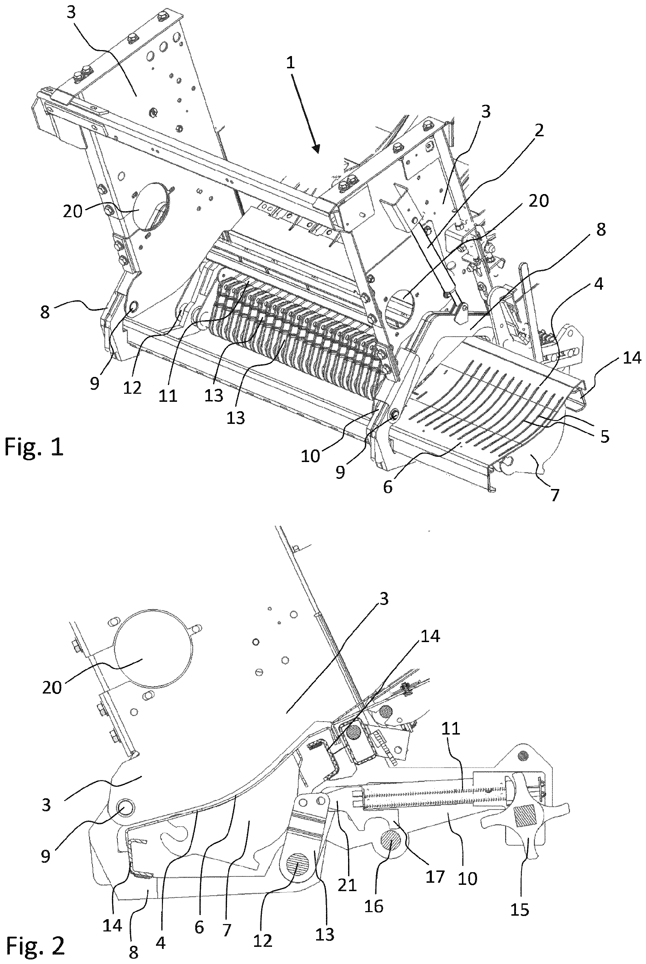

Fig. 1 shows in a perspective view a preferred embodiment of the harvesting machine according to the invention in a first position which can be called the home position. The harvesting machine 1 comprises a main frame 3 which is usually coupled to a chassis of the harvesting machine or is an integral part of it. A cutting frame 4 is also a component of the harvesting machine 1 and includes a crop guiding surface 6 comprising a plurality of substantially parallel slots 5 extending in a direction of travel. As can be seen, the crop guiding surface 6 is slightly bent and has a concave shape in the direction of travel.

Below the crop guiding surface 6, a plurality of knives 7 is arranged side-by-side and pivotally mounted, wherein each knife 7 is aligned with the respective slot 5 in the crop guiding surface 6 and is pivotable about an axis extending substantially perpendicular to the slots 5 between a retracted inoperative position in which it is located substantially below the crop guiding surface 6 and an extended operative position (not shown in the figures), wherein at least a cutting edge of each knife 7 projects above the crop guiding surface 6. The main frame 3 further comprises on either side an installation space 20 for accommodating the rotor configured for cutting the crop in cooperation with the knives 7 protruding from the crop guiding surface 6. For reasons of simplicity, a reproduction and description of the rotor has been omitted in this specification.

In the shown embodiment, the harvesting machine 1 further includes an outer frame 8 and an inner frame 10 which is pivotally connected to the outer frame 8 around a common pivot axis 9 on the main frame 3. Outer frame 8 and inner frame 10 are here arranged as side elements which are designed to accommodate the cutting frame 4 from opposite sides wherein a plurality of transverse frame elements connects the left side element of outer frame 8 and of inner frame 10 with the right-side element of outer frame 8 and of inner frame 10, respectively. Any axis means such as a pin or shaft may be arranged therein such that outer frame 8 and inner frame 10 are enabled to pivot with respect to each other around common pivot axis 9.

In the embodiment of Fig. 1, the cutting frame 4 is mounted to the inner frame 10 by guiding means 14 which are arranged substantially perpendicular to the direction of travel of the crop or the direction of the slots 5 on the crop guiding surface 6. The guiding means 14 may be formed as U-shaped guide rails which accommodate corresponding edges of the cutting frame 4, in this case the front and rear edges of the crop guiding surface 6. Other forms of the guiding means 14 with a different sliding mechanism are possible. In other words, the cutting frame 4 is configured to slide in a lateral direction on or within the guiding means 14 mounted on the inner frame 10. In Fig. 1, the cutting frame 4 is slid out laterally about halfway between a fully accommodated operational position and a fully extended maintenance position wherein an operator of the harvesting machine 1 has sufficient access to the components of the cutting frame 4, i.e. the crop guiding surface 6 with its slots 5 and the knives 7. The sliding function may be supplemented by a lock-and-release function to prevent an unintended sliding out of the main frame 3.

The relative movement of the outer frame 8 with respect to the main frame 3 is achieved by a main actuator 2 which in the shown embodiment is a hydraulic actuator. It is noted that other types of suitable actuators may also be installed, for example an electric actuator having an electric motor. In the shown embodiment of Fig. 1, only one main actuator 2 on one side wall of main frame 3 is visible. It should be noted that a second main actuator 2 may optionally and in a likewise fashion be installed on the other sidewall of main frame 3. In Fig. 1, the main actuator 2 is not extended, i.e. the location of the outer frame 8 with respect to the main frame 3 may be called a "home" position because the extension of the main actuator 2 is minimal. In other words, the outer frame 8 is in its uppermost position with respect to the main frame 3. As can be seen in Fig. 1, actuation of main actuator 2 causes a relative movement of outer frame 8 with respect to main frame 3 around the common pivot axis 9. In this embodiment, also the inner frame 10 having the cutting frame 4 will be moved together with the outer frame 8, and also around the common pivot axis 9. The limitations of the movement of the inner frame 10 will be described below with reference to the other figures.

Referring to Fig. 2 which is a cross-sectional view of the harvesting machine shown in Fig. 1, and referring back to the inner frame 10, a plurality of operating units 11 extends substantially in parallel to the slots 5 substantially in the direction of travel, wherein each operating unit 11 is assigned to a respective knife 7 and is configured to being operated to bring the associated knife 7 from the retracted inoperative position into the extended operative position. Each operating unit 11 may include in the shown embodiment a first spring-loaded rod and a second spring-loaded rod which are shown here as cylindrical rods enclosed by spring elements extending between the respective connected knife 7 on the one side and a bracket on the other side. Other embodiments with one single spring-loaded rod only or more than two springs are possible as well as other mechanisms having the same function. Each operating unit 11 is connected to a lever 13 on the knife side wherein an upper side of each lever 13 cooperates with an underside of each respective knife 7 such that in the extended operative position of a knife 7, the upper side of the lever 13 abuts a notch in each knife 7. The levers 13 are pivotable around an axis, the pivoting movement of the levers 13 being performed by a selector actuator 19 which is described further below.

Furthermore, each operating unit 11 is arranged on a support member 21 wherein each support member 21 is pivotally connected to a corresponding lever 13. Each support member 21 furthermore comprises on the underside a stop bracket 17 which is configured to cooperate with a stop axis 16 of inner frame 10. The function of this cooperation will be explained below. It should be noted that the interaction between the operating units 11 and the stop axis 16 may be embodied in a different way than with a physical support member. For example, each operating unit 11 may be configured with integral elements which are particularly designed to interact with axis 16 to fulfill the same function.

In the following, the selector mechanism 15 of the harvesting machine 1 according to the invention will be explained. The selector mechanism 15 is configured to selectively engage one or more of the plurality of operating units 11 such that the respective knife 7 can be brought from the retracted inoperative position into the extended operative position. What is selected by the selector mechanism 15 is therefore the number of knives 7 which can be brought into the extended operative position. The selector mechanism 15 includes a rotatable shaft extending substantially perpendicular to the slots 5. The rotatable shaft carries a plurality of engagement elements which in the shown embodiment are formed in a star-shape having four arms each. The end of each operating unit 11 is received between two arms of each engagement element. In the position shown in Fig. 2, the operating units 11 are fully engaged with the engagement elements, i.e. the arms of the selector mechanism 16. The rotatable shaft of the selector mechanism 15 may be activated manually by an operator or remotely from an operator's position on the harvesting machine 1 itself or an associated towing vehicle.

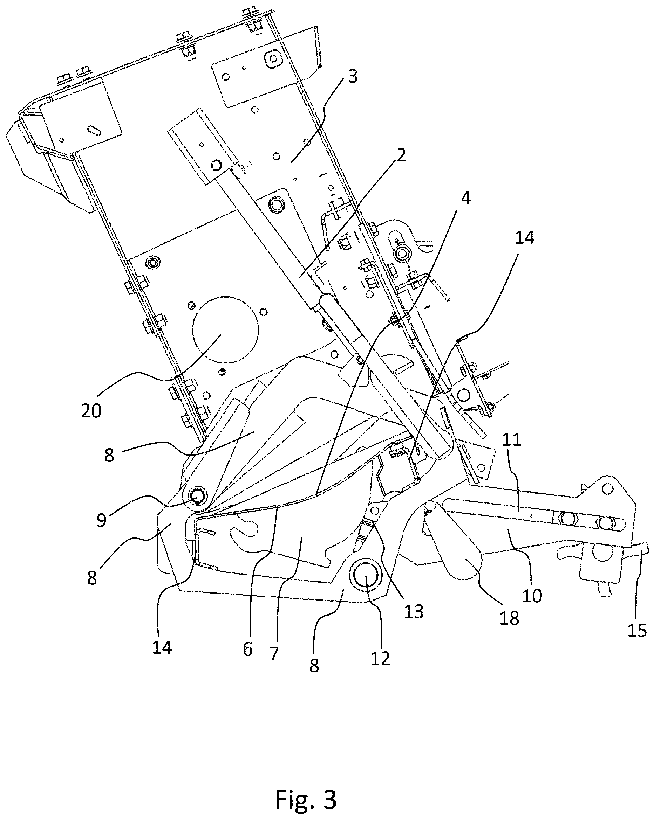

Fig. 3 is a side-elevation view of the harvesting machine of Fig. 1. As already explained with respect to Figs. 1 and 2, the cutting frame 4 including the crop guiding surface 6 and the knives 7 is movable along guiding means 14 positioned on the inner frame 10 in a direction perpendicular to the direction of crop flow. In the shown situation, the main actuator 2 is minimally extended such that the outer frame 8 is in the home position. In other words, the inner frame 10 is in its uppermost position. Further, as already explained above, the operating units 11 are all engaged with the selector mechanism 15. Fig. 3 further shows a locking lever 18 on the side of inner frame 10 which is configured for locking the outer frame 8 with respect to the inner frame 10. Locking lever 18 has at least two functions, the first being a locking function wherein a movement of the outer frame 8 always also includes a simultaneous movement of the inner frame 10. The second function is an unlocking function wherein a movement of the outer frame 8 is independent of the inner frame 10. These functions may be also combined by setting a predetermined position with the locking lever 18 after which the outer frame 8 and the inner frame 10 cannot move together. In other words, there may be a common, locked movement of the outer frame 8 and the inner frame 10 together for a predetermined length or angle of the movement after which both frames are independently moveable, i.e. then the outer frame 8 stills moves while the inner frame 10 keeps a predetermined stationary position.

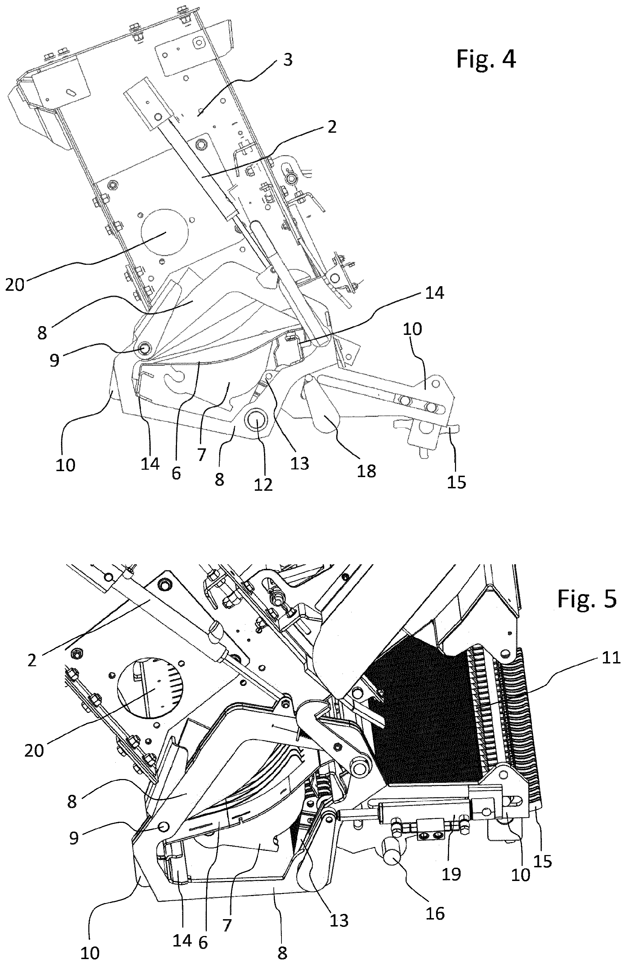

Fig. 4 is a side-elevation view of the preferred embodiment of the harvesting machine according to the invention in a second position. The difference between the position shown in Fig. 3 and the position shown in Fig. 4 is the increased extension of the main actuator 2 resulting in a pivotal movement of the outer frame 8 around the common pivot axis 9. The lower right portion of the machine has been moved a certain distance by the pivotal movement of the outer frame 8 in the clockwise direction.

In this embodiment and position, the inner frame 10 has not been moved relatively to the outer frame 8, i.e. the locking function as described above is active up to the shown extension of the main actuator 2. This results in a further lowering of inner frame 10 with the operating units 11 and the selector mechanism 15 still being in the functional situation where the operating units 11 are fully engaged with the selector mechanism 15.

Fig. 5 is a perspective, cross-sectional view of the harvesting machine shown in Fig. 4. In addition to the components described above with respect to Figs. 3 and 4, Fig. 5 shows the operating units 11 and the selector mechanism 15 in a clearer fashion. Furthermore, a selector actuator 19 is shown which is configured to selectively engage the operating units 11 with the selector mechanism 15. It can also be seen that the knives 7 slightly extend into the crop channel through the slots 5 of the crop guiding surface 6 which depicts a possible operating position of the knives 7.

In the position of Figs. 4 and 5, the inner frame 10 including the operating units 11 and the selector mechanism 15 is fully lowered. This position is also called the dropped floor. A further function in addition to the slide-out movement of the cutting device for with the crop guiding surface 6 and the knives 7 will now be explained although it is not shown in the figures of the first embodiment.

In the case of an activated locking function generated by locking lever 18 such that the outer frame 8 and the inner frame 10 only move together in a locked manner for a predetermined angle around the common pivot axis 9, a further movement of the main actuator 2 has an effect on the selector mechanism 15. This is because once the inner frame 10 does no longer move simultaneously downwards with the outer frame 8, the outer frame 8 continues to pivot in the clockwise direction. At a certain point of this pivoting movement, the support members 21 of the operating units 11 will abut on the stop axis 16 with the stop bracket 17. A further movement of outer frame 8 will lead to a pivotal motion of the support members 21 of the operating units 11 around the stop axis 16 in the counter-clockwise direction such that the engagement elements of the operating units 11, i.e. their ends, will disengage from the selector mechanism 15. It should be noted that such disengagement from the selector mechanism 15 is in this way achieved without separately activating the selector actuator 19. In other words, in this dropped floor position, the operator may not only slide out the cutting frame 4 for maintenance purposes on the crop guiding surface 6 or the knives 7 but also operate the selector mechanism 15 where a different selection may be set. Thus, an operator may upon a respective setting of the locking lever 18 achieve the lowering of the entire cutting frame, e.g. for maintenance purposes, and at the same time the possibility of a new selection of knives 7 by the selection mechanism 15.

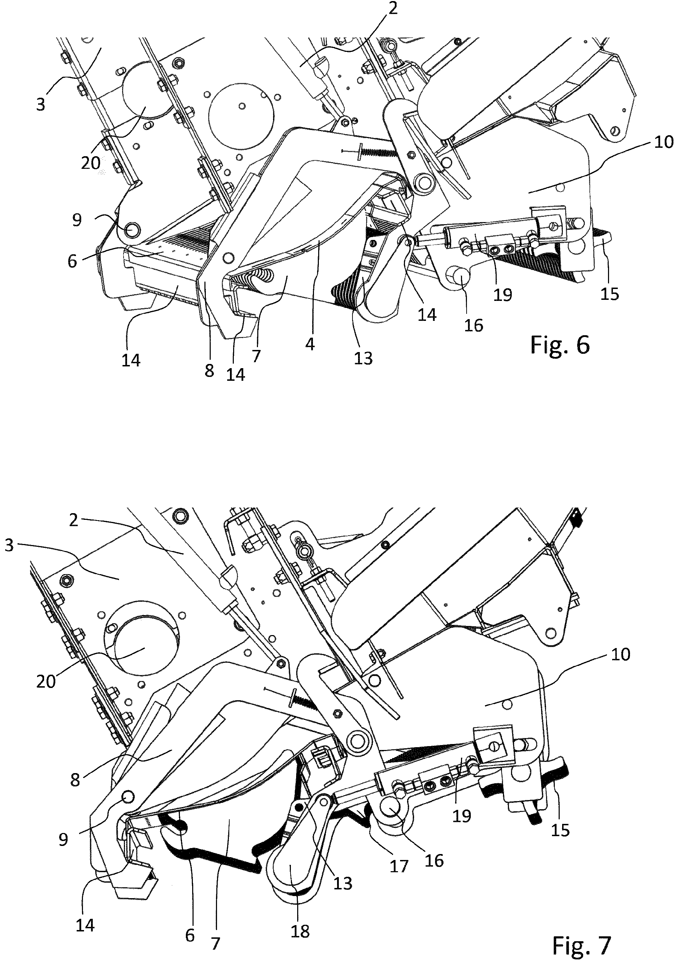

Fig. 6 is a perspective view of a second embodiment of the harvesting machine according to the invention in a first position wherein the main actuator 2 is in its fully retracted position. In the second embodiment, the inner frame 10 is not pivotally movable with respect to the outer frame 8 around the common axis 9 but fixedly attached to the main frame 3. Hence, the guiding means 14 which serve for slidingly moving the cutting frame 4 out of its operating position are arranged on the outer frame 8. This firm arrangement of the inner frame 10 also means that the selector mechanism 15 is stationary with the main frame 3 and thus not moved in a vertical direction upon actuation of the main actuator 2. However, as can be seen in Figs. 6 and 7, the cutting frame 4 is still slidable out of its operating position into a maintenance position, in this embodiment by the guiding means 14 which are arranged on the outer frame 8.

Fig. 7 shows the second embodiment of the harvesting machine 1 of Fig. 6 in a second position wherein the main actuator 2 has been extended so that the outer frame 8 was moved further down but not all the way extended. In this position, the stop bracket 17 on the support member 21 of each operating unit 11 is about to abut the stop axis 16 which is located on the fixed inner frame 10. The engagement of the stop bracket 17 of each operating unit 11 with the stop axis 16 is enabled by the downward movement of outer frame 8 which supports the levers 13 which are connected to the support members 21 of the operating units 11. Upon abutment of the stop bracket 17 on the stop axis 16 a leverage effect is obtained which leads to a lifting of the engagement elements from their engagement with the selector mechanism 15 in the counter-clockwise direction.

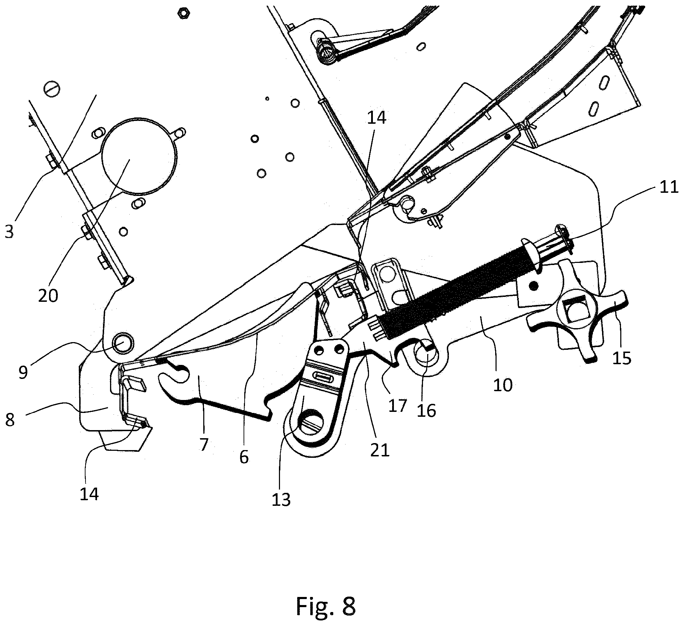

Such lifting position is shown in Fig. 8 which is a section view of the second embodiment of Figs. 6 and 7. The outer frame 8 has been fully lowered by operation of main actuator 2 and the leverage effect has now lifted the engagement elements of the operating units 11 from the selector mechanism 15. Therefore, the selection can now be modified or any maintenance or replacement within the selector mechanism 15 can be performed. The lifting effect for the operating units 11 is therefore achieved without separately operating the levers 13. In addition, the cutting frame 4 with the crop guiding surface 6 and the knives 7 is still slidable out of the operating position into a maintenance position.

With the present invention, a harvesting machine has been provided which has a compact and relatively simple structure, and which offers a simplified maintenance and replacement of the knives and the crop guiding surface while ensuring a reliable and smooth cutting function including the security of the knives and an unfailing knife selection mechanism.

List of reference numbers:
- 1: harvesting machine
- 2: main actuator
- 3: main frame
- 4: cutting frame
- 5: slots
- 6: crop guiding surface
- 7: knives
- 8: outer frame
- 9: common pivot axis
- 10: inner frame
- 11: operating unit
- 12: axis
- 13: lever
- 14: guiding means
- 15: selector mechanism
- 16: stop axis
- 17: stop bracket
- 18: locking lever
- 19: selector actuator
- 20: installation space
- 21: support member

## Claims

1. Harvesting machine (1), particularly a baler or a loading cart, comprising:
a main frame (3) having a main actuator (2);
a cutting frame (4) having a crop guiding surface (6) including a plurality of slots (5) extending in a direction of travel of crop over the crop guiding surface (6) and a plurality of knives (7) arranged side-by-side and pivotally mounted below the crop guiding surface (6), wherein each knife (7) is aligned with a respective slot (5) and is movable between a retracted inoperative position in which it is located substantially below the crop guiding surface (6) and an extended operative position, wherein at least a cutting edge of each knife (7) projects above said guiding surface (6);
an outer frame (8) being pivotable around a common pivot axis (9) and being connected to the main actuator (2) which is configured for moving the outer frame (8) with respect to the main frame (3);
an inner frame (10) having a plurality of operating units (11), each operating unit (11) being associated with a respective knife (7) and each being configured to being operated to bring the associated knife (7) from the retracted inoperative position into the extended operative position, and having a selector mechanism (15) configured to selectively engage one or more of the plurality of operating units (11) such that the respective knife (7) can be brought from the retracted inoperative position into the extended operative position;
wherein the outer frame (8) includes an axis (12) for pivotally holding a plurality of levers (13), each lever (13) being pivotally connected to an operating unit (11) of each knife (7);
wherein guiding means (14) are provided for lateral movement of the crop guiding surface (6) with the plurality of knives (7) from an operating position in-to a servicing position and vice versa; and
wherein, during lateral movement of the crop guiding surface (3) with the plurality of knives (7) from the operating position into the servicing position and vice versa, the operating units (11) and the selector mechanism (15) of the cutting frame (4) remain stationary.

2. Harvesting machine (1) according to claim 1, **characterized in that** the inner frame (10) comprises an assembly (16, 17) configured to cooperate with the plurality of operating units (11) to bring the operating units (11) into or out of engagement with the selector mechanism (15) upon activation of the actuator (2).

3. Harvesting machine (1) according to claim 1 or 2, **characterized in that** the inner frame (10) is pivotally connected to the outer frame (8) around the common pivot axis (9) and the guiding means (14) are provided on the inner frame (10).

4. Harvesting machine (1) according to claim 1 or 2, **characterized in that** the inner frame (10) is fixedly attached to the main frame (3) and the guiding means (14) are provided on the outer frame (8).

5. Harvesting machine (1) according to any of the previous claims, **characterized in that** a locking lever (18) is provided which is configured to lock the inner frame (10) with respect to the outer frame (8) along the movement of the outer frame (8) around the common pivot axis (9).

6. Harvesting machine (1) according to 2 or any of claims 3 to 5, when dependent on claim 2, **characterized in that** the assembly comprises a stop axis (16) on the inner frame (10) and a plurality of stop brackets (17) provided on each of the plurality of operating units (11).

7. Harvesting machine (1) according to any of the previous claims, **characterized in that** the main actuator (2) is a hydraulic actuator.

8. Harvesting machine (1) according to any of the previous claims, **characterized in that** the main actuator (2) involves manual, electrical, electromechanical or hydraulic actuation.

9. Harvesting machine (1) according to any of the previous claims, **characterized in that** upon at least partial activation of the main actuator (2) the plurality of levers (13) are configured to release the knives (7) for lateral movement with the crop guiding surface (6).
